Europäisches Patentamt

(19) European Patent Office

Office européen des brevets

(11) Veröffentlichungsnummer: **0 124 730**
**B1**

(12) EUROPÄISCHE PATENTSCHRIFT

(45) Veröffentlichungstag der Patentschrift:
26.02.86

(51) Int. Cl.⁴: **B 65 G 47/22**, B 65 G 49/00

(21) Anmeldenummer: 84103089.3

(22) Anmeldetag: 21.03.84

(54) Vorrichtung zum Kippen um 90 Grad von auf einem Förderer befindlichen Formlingen, insbesondere Ziegelformlingen.

(30) Priorität: 30.03.83 DE 3311542

(43) Veröffentlichungstag der Anmeldung:
14.11.84 Patentblatt 84/46

(45) Bekanntmachung des Hinweises auf die Patenterteilung:
26.02.86 Patentblatt 86/9

(84) Benannte Vertragsstaaten:
AT FR IT

(56) Entgegenhaltungen:
DE - A - 2 947 033
DE - B - 1 014 904
DE - C - 1 176 040
US - A - 3 759 366

(73) Patentinhaber: Hans Lingl Anlagenbau und
Verfahrenstechnik GmbH & Co. KG,
Albrecht-Berblinger-Strasse 6, D-7910 Neu-Ulm (DE)

(72) Erfinder: Lachenmayr, Josef, Vogelberg 11,
D-8907 Ziemetshausen (DE)

## Beschreibung

Die Erfindung betrifft eine Vorrichtung nach dem Oberbegriff des Anspruchs 1.

Eine Vorrichtung dieser Bauart ist in der DE-B-,10 14 904 beschrieben und dargestellt. Diese bekannte Vorrichtung ist für Ziegelformlinge einsetzbar, die unmittelbar auf dem Förderer liegen, d.h. die nicht auf besonderen Formlingsträgern liegen.

Ziegelformlinge, die aufgrund ihrer Abmessungen in der für die Herstellung und Trocknung günstigsten Lage auf den Formlingsträgern (Traglatten) nicht im Verband für das Brennen gesetzt werden können, müssen um 90° gekippt werden, wenn die Abmessungen des Formlings im gekippten Zustand diesen Verband ermöglichen.

Es ist bekannt, Formlinge auf dem Setzautomaten selbst zu kippen. Jedoch ist hierfür ein erheblicher Aufwand erforderlich, weil die Formlinge vor und nach dem Kippen umgruppiert werden müssen. Außerdem werden die Formlinge zum Trocknen in der Regel so auf die Formlingsträger abgesetzt, daß Strangpreßrichtung bzw. Formlingshohlräume in Richtung der Formlingsträgerlängsachse weisen. Dies erfordert beim Kippen auf dem Setzautomaten ein zusätzliches Drehen oder Umsetzen um 90° in der horizontalen Ebene mit einem erheblichen zusätzlichen maschinellen Aufwand.

Aufgabe der Erfindung ist es daher, eine Vorrichtung der vorliegenden Gattung zu schaffen, mit der auf Formlingsträgern liegende Formlinge gekippt werden können.

Die Aufgabe wird erfindungsgemäß durch eine im kennzeichnenden Teil des Anspruchs 1 wiedergegebene Ausgestaltung der Vorrichtung gelöst. Diese Ausgestaltung ermöglicht es, die Formlingsträger sicher zu ergreifen und samt der darauf befindlichen Formlingsreihe zu kippen, wobei jeweils die beim Kippen frei werdenden Formlingsträger der Unterstützung der nächsten zu kippenden Formlingsreihe dienen. Bei Inbetriebnahme der Vorrichtung ist es deshalb natürlich erforderlich, Formlingsträger in die senkrecht stehenden Kulissenarme einzuschieben, um für die erste zu kippende Formlingsreihe eine Unterstützung vorliegen zu haben. Eine erfindungsgemäße Ausgestaltung ergibt eine einfache und vorteilhafte, zwischen Setzautomat und Trockner einsetzbare Vorrichtung zum Kippen von Formlingen, die die Bereitstellung der Formlinge in der gewünschten Ausgangslage für den Setzautomaten ermöglicht.

Da die Formlinge auf den Formlingsträgern vielfach nicht dicht geschlossen ankommen, ist es zweckmäßig, sie vor dem.Kippen zusammenzuschieben, so daß die Formlingsträger freiliegende Enden zum Einschieben in die Kulissenarme des Wendekreuzes aufweisen. Hierfür ist die im Anspruch 2 angegebene Maßnahme vorgesehen.

Im Rahmen der Erfindung ist es natürlich auch möglich, einzelne jeweils auf einem Formlingsträger z. B. hintereinander herangeführte Formlinge zu kippen.

Ein Ausführungsbeispiel der erfingungsgemäßen Vorrichtung ist in der Zeichnung dargestellt und wird im folgenden näher beschrieben. Es zeigen

Fig. 1 einen Schnitt durch die Vorrichtung in Ausgangslage,

Fig. 2 einen Schnitt durch die Vorrichtung unmittelbar vor Beginn des Kippvorganges,

Fig. 3 eine Draufsicht auf die Vorrichtung.

Eine auf Formlingsträgern, zum Beispiel Traglatten 2, liegende Formlingsreihe 1 wird auf einem Förderer 3 herangefördert und durch Greiferbacken 5 einer Verdichtungseinrichtung 4 so zusammengeschoben, daß die Enden 6 der Traglatten frei liegen. Die so verdichtete, auf den Traglatten 2 befindliche Formlingsreihe 1 wird dann einem Wendekreuz 7 mit beiderseits des Förderers liegenden Kulissenarmen 7a zugefördert. Die freiliegenden Enden 6 der Traglatten 2 der ankommenden Formlingsreihe 1 laufen dabei in horizontal liegende Arme 7a des Wendekreuzes 7 ein.

In zugleich lotrechten stehenden oberen Armen 7a des wendekreuzes 7 befinden sich weitere Traglatten 2, die vom vorhergehenden Kippvorgang darin verblieben sind, bzw. bei Start der Kippvorrichtung dort eingebracht worden sind.

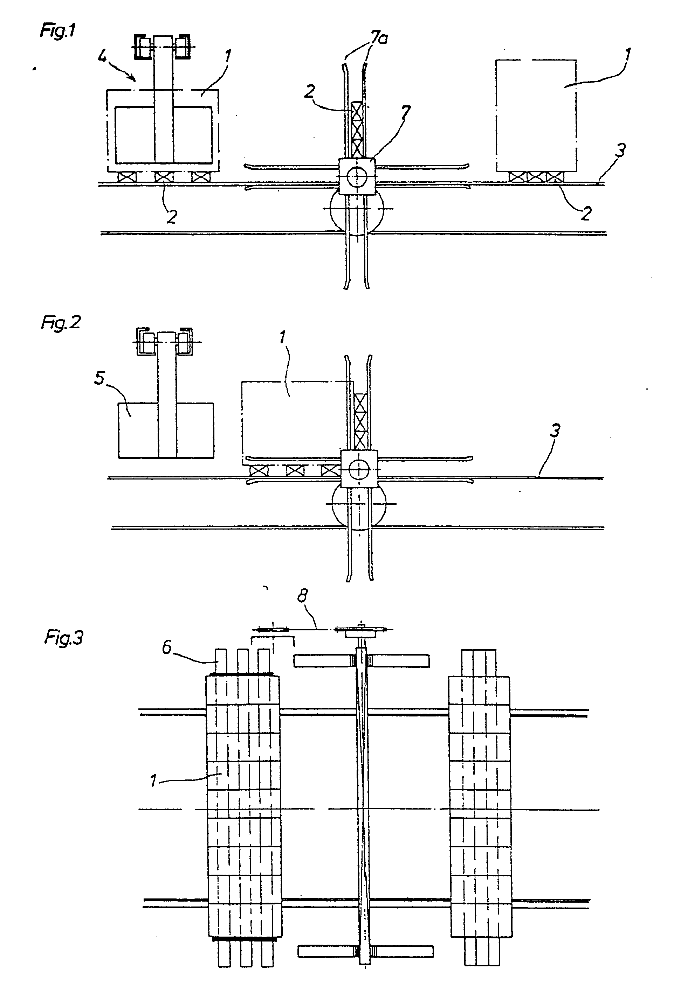

An diesen Traglatten 2 schlägt die ankommende Formlingsreihe 1 an und löst eine 90°-Drehung des Wendekreuzes 7 aus. Das Wendekreuz 7 wird mittels eines intermittierenden Antriebs 8 (Fig. 3) gedreht.

Dabei wird die Formlingsreihe 1, von den in die horizontal liegenden Arme 7a eingelaufenen Traglatten 2 unterstützt, gekippt und kommt in der gekippten Position auf den in den vorderen lotrechten Armen befindlichen Traglatten 2 zu stehen.

Die Traglatten 2, auf denen eine Formlingsreihe zum Wendekreuz 7 gefördert worden ist, verbleiben in den Armen 7a, in die sie eingelaufen sind. Diese Arme nehmen nach einem Kippvorgang nunmehr eine lotrechte Stellung ein, so daß die darin befindlichen Traglatten 2 als Anschlag und zur Unterstützung der nachfolgend gekippten Formlingsreihe 1 bereitstehen.

Die jeweils gekippte Formlingsreihe 1 wird auf dem Förderer 3 einem Setzautomaten zugeführt, während gleichzeitig die nachfolgende Formlingsreihe in das Wendekreuz 7 einläuft.

## Patentansprüche

1. Vorrichtung zum Kippen um 90° von auf einem Förderer (3) efindlichen Formlingen, insbesondere Ziegelformlingen, mit einem angetriebenen Wendekreuz (7), dessen Drehachse quer zur Förderrichtung und etwa parallel zur Oberseite des Förderers (3) gerichtet ist, wobei die Formlinge beim Einfahren in das Wendekreuz (7) auf einem Arm des Wendekreuzes (7) zu stehen kommen,und in der gekippten Position auf dem diesen Arm in Drehrichtung vorgeordneten Arm zum Weitertransport auf dem Förderer (3) zu stehen kommen,
dadurch gekennzeichnet,
daß das Wendekreuz (7) beiderseits des Förderers (3) angeordnete Kulissenarme (7a) zum Einschieben von freiliegenden Enden (6) von jeweils eine ankommende Formlingsreihe (1) tragenden Formlingsträgern (2) aufweist und der Anschlag der ankommenden Formlingsreihe (1) an in den lotrecht stehenden oberen Kulissenarmen (7a) bereitstehenden Formlingsträgern eine 90°-Drehung des Wendekreuzes (7) auslöst.

2. Vorrichtung nach Anspruch 1,
dadurch gekennzeichnet,
daß zum Bilden der freiliegenden Enden (6) der Formlingsträger (2) dem Wendekreuz (7) eine quer zur Förderrichtung wirkende Verdichtungseinrichtung (4) mit Greiferbacken (5) zum Zusammenschieben der Formlingsreihe (1) auf den Formlingsträgern vorgeordnet ist.

## Claims

1. A device for tilting green products and, in particular, green bricks positioned on a conveyor (3) through 90° by maans of a driven turn-over oross (7) whose axis of rotation extends transversely to the conveying direction and approximately parallel to the top of the conveyor (3) wherein the green products entering the turn-over cross (7) are positioned on one arm of the turn-over cross (7) and on another arm ahead of the first arm as viewed in the direction of rotation when tilted for onward transportation on the conveyor (3), characterised in that
the turn-over cross (7) is provided with slotted arms (7a) on both sides of the conveyor (3) for engaging exposed ends (6) of pallat frames (2) which each carry one row of arriving green products (1) and in that the turn-over cross (7) is caused to rotate 90° when the arriving row of green products (1) abuts against the pallet frames held in readiness in the vertically positioned upper slotted arms (7a).

2. A device as claimed in claim 1,
characterised in that
a compacting device (4) acting transversely to the conveying direction and including gripper jaws (5) for pushing the green products in the row (1) together on the pallet frames is disposed ahead of said turn-over cross (7) to expose the ends (6) of the said pallet frames (2).

## Revendications

1) Dispositif pour le basculement sur 90° de produits verts se trouvant sur un convoyeur (3),
notamment de briques vertes, avec une roue redresseuse entraînée (7), dont l'axe de rotation est perpendiculaire au sens de transport et à peu près parallèle à la face supérieure du convoyeur (3), les produits verts étant positionnés verticalement sur un bras de la roue redresseuse (7) lors de leur introduction dans la roue redresseuse (7) et, en position basculée, positionnés verticalement sur le bras situé devant ce bras dans le sens de rotation, à des fins de transport ultérieur sur le convoyeur (3),
caractérisé par le fait que
la roue redresseuse (7) présente des bras à coulisse (7a) disposés de part et d'autre du convoyeur (3), pour l'introduction des extrémités libres (6) des supports de produits verts (2) portant chacun une rangée de produits verts (1) arrivant et que le guide de la rangée de produita verts (1) arrivant déclenche, au niveau des supports de produits verts en attente dans les bras à coulisse (7a) disposés verticalement, une rotation de la roue sur 90°.

2) Dispositif d'après la reventication n° 1,
caractérisé par le fait que,
pour la formation des extrémités libres (6) des supports de produits verts (2), un dispositif de rassemblage (4) à effet perpendiculaire au sens de transport, avec mâchoires de pince (5) pour la poussée de la rangée de produits verts (1) sur les supports de produits verts, est disposée devant la roue redresseuse (7).

*Fig.1*

*Fig.2*

*Fig.3*